# EUROPEAN PATENT SPECIFICATION

(11) **EP 4 057 032 B1**
(45) Date of publication and mention of the grant of the patent: **17.12.2025**
(21) Application number: 21305315.0
(22) Date of filing: 12.03.2021
(51) Int. Cl.: G01T 1/04

(54) **A DEVICE FOR MEASURING THE DOSE DELIVERED THROUGH A RADIOSENSITIVE FILM UNDER EXPOSURE TO IONIZING RADIATIONS**
VORRICHTUNG ZUR MESSUNG EINER DOSIS, DIE DURCH EINEN STRAHLUNGSEMPFINDLICHEN FILM UNTER EINWIRKUNG IONISIERENDER STRAHLUNG ABGEGEBEN WIRD
DISPOSITIF DE MESURE DE LA DOSE DÉLIVRÉE À TRAVERS UN FILM RADIOSENSIBLE SOUS EXPOSITION À DES RADIATIONS IONISANTES

(43) Date of publication of application: 14.09.2022
(73) Proprietor: Centre national de la recherche scientifique, 75016 Paris (FR); Université Paris-Saclay, 91190 Saint Aubin (FR); Consejo Superior de Investigaciones Científicas (CSIC), 28006 Madrid (ES); University of Seville, 41013 Seville (ES)
(72) Inventor: Guardiola Salmeron, Consuelo, 91406 Orsay CEDEX (FR); Márquez, Augusto, 08193, Barcelona (ES); Muñoz-Berbel, Xavier, 08193, Barcelona (ES); del Carmen Jiménez-Ramos, Maria, 41092, Sevilla (ES); García Lopez, Javier, 41012 Sevilla (ES)
(74) Representative: Hautier IP

(56) References cited:
- WO-A1-2019/138309
- WO-A1-97/17595
- US-A1- 2012 235 062
- MCLAUGHLIN W L ET AL: "Radiochromic dosimetry for validation and commissioning of industrial radiation processes", INTERNATIONAL JOURNAL OF RADIATION APPLICATIONS AND INSTRUMENTATION. PART C. RADIATION PHYSICS AND CHEMISTRY, PERGAMON, vol. 31, no. 4-6, 1 January 1988 (1988-01-01), pages 505 - 514, XP024640104, ISSN: 1359-0197, [retrieved on 19880101], DOI: 10.1016/1359-0197(88)90218-4

## Description

### FIELD OF THE INVENTION

The present invention relates to a device for measuring the dose delivered through a radiosensitive film under exposure to ionizing radiations, to a system comprising such device and to the use of such device or system.

More particularly, the device comprises a reflection film; at least one light source; a radiosensitive film; and an optical sensor system comprising a 2-D array of one or more photoresistor units and/or semiconductor units. The present invention also relates to a system comprising the device previously described; a readout integrated circuit unit connected to the optical sensor system of the device; and a processing unit connected to the readout integrated circuit. The present invention also relates to the use of a device or a system as previously described.

### BACKGROUND PRIOR ART

Irradiation, in medicine, chemistry or security is the process by which an object is exposed to radiations. Most frequently, the term radiation refers to ionizing radiations. Ionizing radiations are generated by different sources which may be natural, e.g. cosmic rays or terrestrial radiations, or artificial, e.g. medical or industrial uses of radiations. Among the different types of ionizing radiations, some have health effects which are grouped between deterministic effects by the killing of cells or stochastic effects by the formation of mutation of somatic cells or other processes, which may lead to the development of cancers.

The effects of ionizing radiations depend on the type of radiations which is emitted but also on the dose which is delivered and absorbed. The term absorbed dose describes the amount of radiation absorbed by an object or a person. The unit for absorbed dose is the Gray (Gy). Absorbed dose refers to the energy that is deposited locally by unit of mass in an absorbing medium from ionizing radiations. A dose may be delivered at a high dose rate or at low dose rate, for instance by multiple fractionated doses.

A precise evaluation of the dose delivered by ionizing radiations to a location is fundamental in multiple technical fields. In radiotherapy for instance, a specific dose to a particular region of a patient must be delivered. It is expected from the devices used that the exact specific dose prescribed is properly delivered at the location targeted with the expected rate. In both radioprotection and radiotherapy, measuring or monitoring ionizing radiations is an essential aspect allowing the determination of the equipment adapted for protection against radiation or the determination of the effective operation of the device according to the dose and the situation.

Traditionally, radiochromic films such as GAFchromic^{™} films are considered the basic two dimension passive detectors in the area for dose verification. Due to their high spatial resolution, low energy dependence, and quasi water-equivalence, they are widely used for quality assurance measurements and treatment verification (Devic, S. Radiochromic film dosimetry: Past, present and future. Phys. Med. 2011, 27, 122-134). Under exposure to ionizing radiations, a polymerization reaction occurs within the active layer of the radiochromic film, producing a change in the optical density of the film, i.e. in the film colour, which may be correlated to the delivered dose inside it without additional chemical post-processing.

However, the standard quantification method of those optical densities is based on image scanning and requires a post-processing after irradiation. Indeed, a minimum time required of 24 hours is recommended between irradiation time and film scanning (Niroomand-Rad, A.; Blackwell, C.R.; Coursey, B.M.; Gall, K.P.; Galvin, J.M.; McLaughlin, W.L et al,. Radiochromic film dosimetry: Recommendations of AAPM Radiation Therapy Committee Task Group 55.Med. Phys. 1998, 25, 2093-2115).

Therefore, there is a considerable time-delay for evaluating the dose delivered. In practice, the dose delivered is calculated with analytic models implemented in the treatment planning systems in radiotherapy softwares, but it is not verified experimentally in real-time. The analysis time-delay of radiochromic films make them an unfeasible tool for real-time and in situ daily dose evaluations provided optical density is considered as the only parameter to be correlated to the delivered dose.

US 2012/0235062 A1 discloses a radiation detection device with at least one self indicating radiation sensor and at least one machine readable sensor.

WO 2019/138309 A1 discloses a system for real-time determination of characteristics of radio-chromic films, comprising: one or more transmission optical fibers, adapted to transport an optical signal emitted by a light source located at one end of said one or more transmission optical fibers; one or more collection optical fibers, adapted to transport the optical signal towards a measuring and processing system for measuring and processing said optical signal, located at one end of said one or more collection optical fibers; an optical coupler adapted to couple said one or more transmission optical fibers and said one or more collection optical fibers in an optical cable; an optical backscattering/reflection system adapted to: house one end of said optical cable opposite to that of said optical signal source and measuring and processing system; house a radio-chromic film of the type sensitive to ionizing radiations, so that it is hit by an optical signal transported by said one or more transmission optical fibers and emits an optical signal towards said one or more collection optical fibers; receive ionizing radiation and convey it onto the area of said radio-chromic film hit by said optical signal, simultaneously with said optical signal emission.

There is therefore the need for a device which allows measuring in real-time and in situ the dose delivered to a particular location.

### SUMMARY OF THE INVENTION

To this effect, the invention discloses a device for measuring the dose delivered through a radiosensitive film under exposure to ionizing radiations, the device comprising:
- a reflection film having an inner face opposite to an outer face, the inner face being adapted to reflect light;
- at least one light source arranged to emit at least one light beam towards the inner face of the reflection film;
- a radiosensitive film having a first face facing the inner face of the reflection film and an opposite second face;
- an optical sensor system having a first face facing the second face of the radiosensitive film and adapted to receive the light beam from the at least one light source after reflection from the inner face of the reflection film, the optical sensor system having a second face opposite to the first face,

wherein the first face of the optical sensor system comprises a 2-D array of one or more photoresistor units and/or semiconductor units, the one or more photoresistor and/or semiconductor units being fixed to a support layer;
wherein the reflection film, the radiosensitive film and the 2-D array of photoresistor units and/or semiconductor units are essentially parallel, and
wherein the at least one light source is not located between the inner face of the reflection film and the first face of the radiosensitive film.

Such device allows measuring in real-time and in situ the dose delivered to a particular location.

By "radiosensitive film", it is understood a film which comprises a material whose structural and/or optical properties are transformed in response to irradiation.

By "2-D array of one or more photoresistor units and/or semiconductor units", it is understood a plurality of photoresistor units and/or semiconductor units arranged as a matrix or a grid, being therefore side by side and forming an optical sensor face essentially parallel to the radiosensitive film. The photoresistor units and/or semiconductor units of the 2-D array are adapted to receive the light reflected by the reflection film and which has passed through the radiosensitive film.

Photoresistor units and/or semiconductor units of the optical sensor system generate current or a resistance change in response to light impinging thereon. Such units are used in a variety of fields to capture and record spatial, spectral and/or temporal light signatures. A 2-D array of photoresistor or semiconductor units may correspond to a mosaic of closely spaced detector elements that convert the incident electromagnetic radiation into electrical signals. By "photoresistor units" of the optical sensor system, it is understood a passive component whose resistance decreases with respect to receiving light on the component's sensitive surface. By "photoresistor units", it may also be understood a photoresistor comprising semiconductor substrates. By "semiconductor units" of the optical sensor system, it may be understood a semiconductor of high resistance or doped to have a high resistance which is modulated when the light impinges the semiconductor unit or a photodiode.

By "wherein the reflection film, the radiosensitive film and the 2-D array of photoresistor units and/or semiconductor units are essentially parallel", it is understood that each of the reflection film, the radiosensitive film and the 2-D array of photoresistor units and/or semiconductor units may correspond to a plan and that each of these plans are essentially parallel between each other. In the case where the reflection film, the radiosensitive film and the 2-D array of photoresistor units and/or semiconductor units are curved or have any particular shape, it is understood that the surfaces of each of the reflection film, the radiosensitive film and the 2-D array of photoresistor units and/or semiconductor units correspond to surfaces which are parallel between each other, meaning each of these surfaces have points that are at a fixed normal distance from the others respectively.

By "wherein the at least one light source is not located between the inner face of the reflection film and the first face of the radiosensitive film", it is understood that the at least one light source is arranged so as to be located around the volume which is formed between the inner face of the reflection film and the first face of the radiosensitive film. Such location of the at least one light source prevents the ionizing radiations to pass through the at least one light source, therefore potentially affecting the light source and/or being attenuated, deviated or reflected, which can lead to erroneous measurements. Indeed, the light source should be placed out of the radiation field. Also, such location prevents the formation of any shadow on the radiosensitive film or the scattering from the radiation source that impinges on the device resulting from the light source being located between the reflection of a light beam on the reflection face of the reflection film and the radiosensitive film.

Such a device allows for the real-time reading of the dose delivered into the radiosensitive film when it is irradiated by exposure to ionizing radiations.

Advantageously, the reflection film, the radiosensitive film and the support layer of the optical sensor system are flexible. With such flexible elements, the device may be curved or bent so as for the device to fit the shape of an object having a complementary form. For instance, the device comprising such flexible reflection film, radiosensitive film and optical sensor system may be curved so as to follow the shape of a human body.

Advantageously, the photoresistor units and/or semiconductor units are embedded into one or more flexible printed circuits.

As the optical sensor system comprises one or more photoresistor units and/or semiconductor units, when in combination with a flexible support layer, or when the photoresistor units and/or semiconductor units are embedded into one or more flexible printed circuits, the device may be bent as the photoresistor units and/or semiconductor units may be independently displaced from each other.

Advantageously, the device is encapsulated in a polymer. Preferably, the polymer is water-equivalent. For instance, the polymer consists in or comprises polyméthylsiloxane (PDMS), polyester, polyimide, or nylon. Preferably, the polymer is a transparent ultrathin polymer of a thickness inferior or equal to 200 nm. Such encapsulation allows protecting the device and maintaining the elements of the device together while being manipulated.

Advantageously, the at least one light source comprises one or more LEDs and/or one or more lasers. Preferably, the at least one light source is a low power light source, for instance having a luminous efficacy of at least 100 lumens per watt, or even more preferably of at least 200 lumens per watt. Preferably, the at least one light source comprises at least a green light source. Even more preferably, the at least one light source consists in a green light source. The green light source allows a higher efficiency regarding the detection of the light passing through the radiosensitive film by the optical sensor system.

Advantageously, the radiosensitive film comprises a polymer, for instance polyester or a polymer with a dye such as crystalline polyacetylenes, in particular diacetylenes, the polymer being a polymer whose structural and/or optical properties are transformed in response to irradiation, for example by changing colour when it is exposed to ionizing radiations.

Advantageously, the radiosensitive film is a radiochromic film. A radiochromic film may refer to radiochromic dosimeters, which are commonly used in forms of liquids, gels and pellets, and which are used in the present invention as a film.

Under exposure to ionizing radiation, a polymerization reaction occurs within the active layer of the radiochromic film, which produces an irreversible change in the optical density of the film, i.e. in the film colour which may be correlated to the delivered dose inside it without additional chemical post-processing. Radiochromic film usually comprises an active layer between two layers, the active layer comprising a marker dye which darkness increases with an increasing absorbed dose. Gafchromic^{™} films are an example of a radiosensitive film, such as Gafchromic^{™} EBT3 films which consist in poly-diacetylene material which contains a yellow marker dye.

Advantageously, the radiosensitive film is made of polycarbonate. A polycarbonate film may for instance be used in nuclear applications, with a fading effect for instance due to Ultraviolet C (UVC) exposure.

Advantageously, the device comprises at least one lightguide. By "lightguide" it is understood a transparent material such as glass or plastic which can transmit an emitted light beam from the at least one light source through internal reflections to the reflection film. Alternatively, by "lightguide" it is understood a light pipe such as an optical fiber which comprise rigid or flexible plastic tubes. A lightguide focuses the emitted light beam from the at least one light source and spread it evenly with the desired shape on the reflection film so as to obtain a homogeneous reflection over the radiosensitive film. Such at least one lightguide therefore allows improving the homogeneous reflection and diffusion of the light on the radiosensitive film and therefore allows a better measurement of the light passing through the radiosensitive film and being received by the optical sensor system. Such at least one lightguide is preferably located between the at least one light source and the reflection film but is not located between the inner face of the reflection film and the first face of the radiosensitive film.

Advantageously, the reflection film is a metallized microfilm or a polymer film coated with a layer of metal such as aluminum. Such metallized microfilm allows effectively reflecting the light from the at least one light source of the device. Preferably, the metallized microfilm is a metalized BoPET film, i.e. a biaxially-oriented terephthalate film such as Mylar^{™}.

Advantageously, the reflection film has a thickness below 100 µm, preferably below 20 µm. Even more preferably, such reflection film has a thickness below or equal to 1 µm, the preferred thickness being from 0,5 and 1 µm. Such thickness of the reflection film allows the ionizing radiations to pass through the reflection film without being disturbed, deviated, reflected or decreased, and therefore allows measuring the delivered dose which would have been emitted by a radiation generating device if the device was not provided. In particular embodiments, the reflection film may be obtained by using physical vapor deposition, which allows obtaining for instance a reflection film from 10 nm to 1 µm.

The invention also discloses a system comprising one of the devices previously described, the system comprising a readout integrated circuit unit connected to the optical sensor system of the device via a first connection, and a processing unit connected to the readout integrated circuit via a second connection.

A readout circuit relays the electrical signal from each detector element or pixel, e.g. the photoresistor and/or semiconductor units according to the present invention, to an output, for instance but without being limited to such example to output amplifiers. For instance, the readout circuit may measure the voltage change when at least one light beam is emitted by the light source, the voltage change being transmitted to a processing unit. In particular, the readout circuit allows the connection with any kind of processing unit for transmitting the information to a user.

By processing unit, it is understood any element which is able to receive information from the readout circuit and which is able to manage such information by transforming, interpreting, calculating, or displaying such information. A processing unit may correspond to a computer, a control remote system, a mobile phone or any similar devices.

Advantageously, the second connection between the readout integrated circuit and the processing unit comprises at least one micro-antenna in communication with the processing unit. Preferably, the second connection is a wireless connection and corresponds for instance to a Bluetooth or a Wifi connection.

Advantageously the second connection between the readout integrated circuit and the processing unit is a Radio Frequency Identification (RFID) tag.

Advantageously, the processing unit is a control remote system.

The invention also disclose the use of a device as described previously or a system as described previously for measuring the dose delivered through a radiosensitive film under exposure to ionizing radiations.

The present invention has been described according to different advantageous features which may be all combined with each other.

### BRIEF DESCRIPTION OF THE DRAWINGS

The invention will be better understood and its various characteristics and advantages will emerge from the following description of a number of exemplary embodiments and its appended figures in which:
- Figure 1 displays a device of the present invention;
- Figure 2 displays a system of the present invention comprising a device of the present invention;
- Figure 3 displays a 2-D map with a pixel distribution corresponding to the detection of light by the 2-D array of photoresistor and/or semiconductor units of the device of the present invention.

### DETAILED DESCRIPTION OF THE INVENTION

In this specification, the invention will be described by way of examples related to the different devices of the invention and the system related.

The device of the present invention allows measuring the dose delivered through a radiosensitive film under exposure to ionizing radiations. In particular, the device allows measuring in real-time and in situ the dose delivered to a particular location. The device comprises a reflection film having an inner face opposite to an outer face, the inner face being adapted to reflect light.

The inner face of the reflection film corresponds to the face which faces the inside of the device while the outer face of the reflection film faces the outside of the device. While the inner face is adapted to reflect the light, the outer face is preferably adapted to prevent any light from accessing the inside of the device while allowing the passage of ionizing radiations through the reflection film. In particular, the light beam emitted by the light source is directed towards the inner face of the reflection film and is reflected on the inside of the device. Such light beam is preferably homogeneous and constant when the device is used. Also preferably, the light is focalized, after its reflection on the reflection film, on the radiosensitive film and further on the 2-D array of photoresistor and/or semiconductor units.

The skilled person would understand that the number of light sources is directly dependent on the size and surface of the radiosensitive film which receives light from the light source. The size and surface of the radiosensitive film is dependent on the surface which should be covered by a device of the present invention for measuring the dose delivered.

Preferably, the outer face of the reflection film prevents any light from passing through the reflection film. Also preferably, the reflection film does not modify the ionizing radiations passing through the reflection film, e.g. does not reflect, decrease, disturb or deviate any of the ionizing radiations which pass through the reflection film.

The light beam emitted from the at least one light source is emitted towards the inner face of the reflection film, the light source not being located between the inner face of the reflection film and the first face of the radiosensitive film. Therefore the light beam is emitted towards the reflection film.

The light beam, after reflection, passes through the radiosensitive film. The light beam will pass differently through the radiosensitive film based on the structural and/or optical properties of the radiosensitive film, which may have changed according to the ionizing radiations emitted by the radiation that is impinging in the device. Typically, the thickness of the radiosensitive film is of 100 to 300 µm, however a preferred thickness would be below 150 µm, an even more preferred thickness being below or equal to 100 µm.

In some embodiments, the radiosensitive film is a radiochromic film. A radiochromic film comprises at least an active layer comprising a dye which changes colour when exposed to ionizing radiations. For instance, the radiosensitive film is a radiochromic film such as a GAFCHROMIC^{™} MD-55 film which comprises a clear polyester of for instance 25 µm sandwiched between two adhesive films of for instance 25 µm, the clear polyester and the adhesive films being sandwiched between two active layers of for instance 16 µm, and the clear polyester, the adhesive films and the active layers being again sandwiched between two clear polyester films of for instance 67 µm. A GAFCHROMIC^{™} MD-55 film has a net density of 0,90 at 25 Gy and 1,75 at 50 Gy, the net density being the change in density due to the absorbed radiation dose. The radiosensitive film may also be a radiochromic film such as a GAFCHROMIC^{™} HD-810, having an active layer of for instance about 6,5 µm sandwiched between a surface layer of 0,75 µm and a clear polyester of for instance about 97 µm, the GAFCHROMIC^{™} MD-55 film having a net density of 0,30 at 100 Gy and 1,15 at 500 Gy. A GAFCHROMIC^{™} EBT3 film may be used, comprising an active layer of for instance about 28 µm sandwiched between two clear polyester of for instance 125 µm.

Other radiochromic films such as GAFCHROMIC^{™} DM-1260, GAFCHROMIC^{™} MD-55-2, GAFCHROMIC^{™} FWT-60 may be used, according to the optimum dose range of such radiochromic films and the dose of ionizing radiations expected to pass through the radiochromic film or the dose prescribed in radiotherapy.

In particular, GAFCHROMIC^{™} EBT are used, such as EBT, EBT-XD, EBT2 and EBT3. GAFCHROMIC^{™} EBT3 is designed for the dose range from 0,2 to 10 Gy and comprises an active layer of about 28 µm comprising yellow marker dye, the active layer being sandwiched between two matte-polyester substrates of about 125 µm, the matte polyester substrate comprising silica particles embedded in the surface. GAFCHROMIC^{™} EBT2 comprises an active layer of about 28 µm between on one side a smooth polyester layer of about 175 µm and on the other side an acrylic adhesive layer of about 20 µm. The opposite side of the acrylic adhesive layer faces a matte-polyester substrate of about 50 µm.

The light beam which will be able to pass through should be received by the optical sensor system, which comprises a 2-D array of one or more photoresistor units and/or semiconductor units. These 2-D array of one or more photoresistor units and/or semiconductor units have a pixel-type distribution which allows creating a 2D-dose map. Indeed, the size of each unit may preferably be inferior or equal to 20 mm, even more preferably inferior or equal to 700 µm. The smaller the photoresistor and/or the semiconductor units are, the more accurate the dose map is. Therefore, it is possible to determine, according to the intensity of the light received by each of the units, a 2D-dose map of pixels wherein each pixel may be related to a light intensity received corresponding to a delivered dose of ionizing radiations.

Such a 2-D array of one or more photoresistor units and/or semiconductor units may be referred as a multi array system. Such system allows creating a customized pattern with lithography techniques. Such kind of material and microfabrication techniques allows creating tailored microstructures with any desired spatial resolution. Additionally, the semiconductor material of the semiconductor units may be doped so as to change the resistivity properties and, therefore, to choose a radiation sensibility range. For example, in the case of silicon semiconductor, which is typically used in microtechnology, Silicon-on-Insulator (SOI) may be used for thinner final results. The device silicon may for instance be <100>, n-type doped with phosphorus, with a nominal resistivity greater than 3.5 kΩ·cm and nominal thicknesses of 10 ± 0.5 µm and 20 ± 0.5 µm. The wafer can be patterned with a desired layout as well as creating by diffusion or implantation a well-defined pixel corresponding to each photoresistor units and/or semiconductor units.

For example, a ring-shaped cylindrical engraving can be made centred on a pixel of one "unit-cell" and subsequently doped accordingly with the resistance range required with dopant type N+ or P+ depending on the substrate type. These pixels can be distributed in multiplex-arrays with pitches from 25 to 200 µm and stacked laterally to cover several centimetres of area. A similar procedure may be followed with a standard 300 µm wafer. At the end of the procedure, a thinning process of the substrate can be made through chemical etching or reactive ion processes to obtain membrane-like devices that are thin enough to avoid ionizing radiations scattering, for instance in the patient body, when the device of the present invention is attached to the skin. Semiconductors can be Si, Ge, SiC, CdTe, CdS, CdZnTe, GaAs, B₄C, among others.

In the case of using semiconductor units comprising a semiconductor wafer, e.g. silicon-on-insulator (SOI) wafer, the support wafer of the SOI may be removed so as to have a layer of semiconductor units being of 2 to 50 µm of thickness.

Even without the removal of the support wafer which is typically rigid, if the semiconductor units are small enough, or separated or diced to small enough pieces, the semiconductor units may be embedded into the support layer of the optical sensor system so as to follow any bending of the device and so in this case the bending of the optical sensor system.

For instance, the 2D-array of photoresistor or semiconductor units may comprise units of a size ranging from 0,2 millimeters to 20 centimeters. Semiconductor units of the optical sensor system such as photodiodes commercially available may be used but other photodiodes may also convene. For instance, semiconductors of photodiodes such as CdSe, CdS, CdTe, InSb, InP, PbS, PbSe, Ge, Is, GaAs, etc. may be used so as to create patterns with masks and so as to maximize the spatial resolution to cover any area. Are preferred the semiconductors of high resistance such as CdS however some others may be doped so as to obtain a high resistance.

Preferably, the device is calibrated before being used. By calibration, it is meant that a reference light, or baseline value, is received by the optical sensor system and is established before the radiosensitive film has received any ionizing radiations. A light is emitted from the at least one light source towards the reflection film so that the light is reflected to the first face of the optical sensor system after having passed through the radiosensitive film which has not received any ionizing radiations previously. Such reference light or baseline value allows determining the delivered dose based on the difference of the light passing through the radiosensitive film before and after its irradiation by ionizing radiations rather than determining the delivered dose based on a unique value of light received by the optical sensor system. Such calibration also allows taking into account any imperfection of any element of the device, as the reference light received by the optical sensor system allows a relative determination instead of a raw determination.

It is particularly important that during a calibration of the device, the light emitted by the at least one light source remains the only source of light which will be received, after its reflection by the reflection film and its passage through the radiosensitive film, by the optical sensor system.

The device of the present invention is not limited to classic known radiochromic films. Indeed, the colour change of irradiated films can be also produced over other polymers, in lower or higher intensity of ionizing radiations although. It is due to the unavoidable chemical reactions after irradiation that transform the structural and optical properties of these materials. Irradiations produce primary and secondary radicals into the polymer-based materials that trigger C-C bond transformations, double bonds, and crosslinking (Clough R.L. et al., Polymer Degradation and Stability 49 (1995) 305-313*;* Nouh S.A., Radiation Protection Dosimetry, Volume 183, Issue 4, June 2019, Pages 450-459 2*).* Those effects modify the optical properties of the polymers and are dependent on the radiation type.

Likewise, according to the device of the present invention which allows in-situ and real-time measurement of the delivered dose, both polymers and materials are chosen according to the ionizing radiations, which can produce either permanent or annealable colour-centers in a radiochromic film.

In radiotherapy, the device may be placed between the patient-body to be treated and a radiation generating device which emits the ionizing radiations. The ionizing radiations emitted by the radiation generating device will affect the radiosensitive film, which will modify the transmission of the light beam emitted by the at least one light source through the radiosensitive film after such light beam has been reflected on the reflection film. The amount of light which would pass through the radiosensitive film after the emission of the ionizing radiations by the radiation generating device should be different from the amount of light which would pass through the radiosensitive film before the emission. Further to the amount, the device of the present invention particularly allows to determine the one or more locations where the radiosensitive film has been irradiated and to determine the dose delivered at these one or more locations.

In a particular embodiment, the device may comprise an adhesive layer comprising an inner face and an adhesive face. The inner face is fixed to the device while the adhesive face is placed at any location where ionizing radiation is to be measured. Such an adhesive layer allows placing the device at a specific location in such a way that it is not required to maintain it further with any means. For instance, the adhesive layer may be at least partially fixed by its inner face on the outer face 14b of the optical sensor system. The adhesive layer may also be fixed partially by its inner face on the readout integrated circuit unit. The adhesive layer may be fixed by its inner face to a polymer encapsulating the device. Such a device comprising an adhesive layer may be considered as a patch.

In any embodiment of the present invention, the device of the present invention comprises an opening which gives access to the radiosensitive film so as to replace the radiosensitive film. This opening allows re-using the device by only replacing the radiosensitive film. In the embodiments where the device is encapsulated in a polymer, the polymer comprises an opening which allows replacing the radiosensitive film or separating the polymer from the rest of the device.

Alternatively, the device may be incorporated into any wound care product or any already existing patch.

In a particular embodiment, the device may be a portable device. It may be incorporated in a bracelet or any other portable device.

Preferably, there is no space between the radiosensitive film and the optical sensor system.

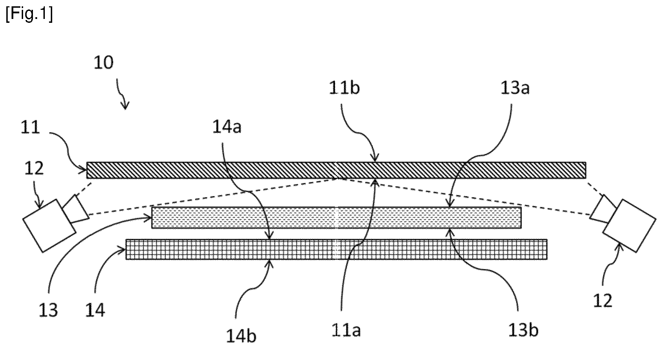

Figure 1 displays a device of the present invention comprising a reflection film 11 having an inner face 11a opposite to an outer face 11b, the inner face being adapted to reflect light; two light sources 12 arranged to emit at least one light beam towards the inner face 11a of the reflection film; a radiosensitive film 13 having a first face 13a facing the inner face 11a of the reflection film and an opposite second face 13b; an optical sensor system 14 having a first face 14a facing the second face 13b of the radiosensitive film 13 and adapted to receive the light beam from the at least one light source 12 after reflection from the inner face 11a of the reflection film 11, the optical sensor system having a second face 14b opposite to the first face 14a. The first face 14a of the optical sensor system 14 comprises a 2-D array of one or more photoresistor units and/or semiconductor units, the one or more photoresistor and/or semiconductor units being fixed to a support layer. The reflection film 11, the radiosensitive film 13 and the 2-D array of photoresistor units and/or semiconductor units are essentially parallel, and the two light sources 12 are not located between the inner face 11a of the reflection film 11 and the first face 13a of the radiosensitive film 13.

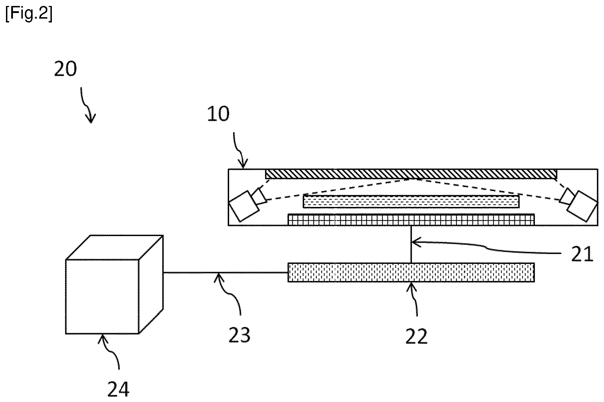

Figure 2 displays a system 20 of the present invention comprising a device 10 of the present invention. The system 20 comprises a readout integrated circuit unit 22 connected to the optical sensor system 14 of the device 10 via a first connection 21, and a processing unit 24 connected to the readout integrated circuit 22 via a second connection 23.

The first connection 21 may be any known type of connection between the photoresistor and/or semiconductor detector units and the readout circuitry. The second connection 23 may be any known wired connection or any known wireless connection which is able to transmit the electrical signal obtained from each photoresistor and/or semiconductor detector units.

The processing unit 24 may be any element which is able to receive any information such as electric signal from the readout circuit 22 and which is able to manage such information by transforming, interpreting, calculating, or displaying such information. A processing unit 24 may correspond to a computer, a remote control system, a mobile phone or any similar electronic devices. Such processing unit may comprise an application or software installed with standard wire-connection, a wireless connection or a Bluetooth connection.

For radiotherapy applications of the present invention, the transmission of the information may be confidential if such information is related to medical personal data. Appropriate means for transferring information obtained by the device of the present invention should be used in such situation according to regulations such as the EU Regulation on the protection of personal data (EU 2016/679, GDPR) or any other national regulation.

The second connection 23 between the readout integrated circuit 22 and the processing unit 24 may comprise at least one micro-antenna in communication with the processing unit 24. Preferably, the second connection 23 is a wireless connection and corresponds for instance to a Bluetooth or a Wifi connection. Also, the second connection between the readout integrated circuit 22 and the processing unit 24 may comprise an RFID tag.

The system may include micro-antennas integrated for sending an output-signal from the device 10 attached to a patient-body to an external radiotherapy control room. Multi radio frequency antennas may be assembled with the device or system of the invention and transmit the accumulative dose in each 2-D array pixel immediately in real-time.

If using a RFID tag, the system 20 of the present invention can transmit serial numbers to a stationary RFID reader, e.g. a device that can wirelessly communicate with antennas when the device is irradiated. Each RFID tag may have an identification number, which is associated to a user or patient. Likewise, a far-field communication (FFC) system can be used to allow clinicians gathering the information from a control room during the radiation treatments, according to regulations such as the EU Regulation on the protection of personal data (EU 2016/679, GDPR) or any other national regulation when such regulation should apply. A wireless readout circuit unit may transmit the voltage in a digital output. When received by the processing unit, an included calibration curve according to each radiosensitive film batch may be used to convert that voltage in cumulative dose.

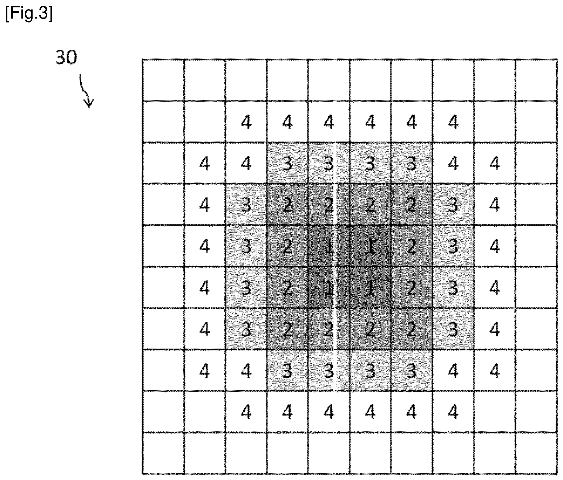

Figure 3 displays a 2-D map 30 with a pixel distribution of 10*10 pixels corresponding to the detection of light by the 2-D array of photoresistor and/or semiconductor units of the device of the present invention. The 2-D map of figure 3 may correspond to the graphic user interface transmitted by a processing unit to the user. Such 2-D dose map indicates according to different colour or different shades of gray according to the intensity of the light received by the different photoresistor and/or semiconductor units, which is related to the delivered dose of ionizing radiations. Figure 3 corresponds to an example and many different pixel distributions may be used, not being limited by a distribution of 10*10 pixels. Conversely, pixel distributions following specific patterns may be used for specific applications, depending on the surface which should be covered by the device of the present invention. A higher number of pixels may provide more detailed information on the delivered dose.

According to the 2-D map of figure 3, the pixels 4 are blank and correspond to pixels which have received a light having an intensity which is equal to a reference light or baseline value and which therefore corresponds to an area of the radiosensitive film which did not prevent the light from passing through the radiosensitive film. Therefore, such area of the radiosensitive film has not been modified by ionizing radiations. It can be concluded from such pixels 4 that no ionizing radiations have passed through such area and that the delivered dose according to this area is negligible.

According to the 2-D map of figure 3, the pixels 3 are light gray and correspond to pixels which have received a light having an intensity which is slightly inferior to a reference light or baseline value and which therefore corresponds to an area of the radiosensitive film which slightly prevented the light from passing through the radiosensitive film. Therefore, such area of the radiosensitive film has been modified only slightly by ionizing radiations. It can be concluded from such pixels 3 that a first amount of ionizing radiations has passed through such area and that the delivered dose according to this area is superior to the delivered dose in the areas of pixels 4. For instance, which is not limitative to the present invention, the dose delivered according to a pixel 3 could be 0,1 Gy.

According to the 2-D map of figure 3, the pixels 2 and 1 are gray and dark gray and correspond to pixels which have received a light having an intensity which is inferior to a reference light or baseline value and which therefore corresponds to an area of the radiosensitive film which prevented the light from passing through the radiosensitive film. Therefore, such area of the radiosensitive film has been modified by ionizing radiations. It can be concluded from such pixels 2 and 1 that a second and third amount of ionizing radiations has passed through such area and that the delivered dose according to these areas is superior to the delivered dose in the areas of pixels 3 and 4. For instance, which is not limitative to the present invention, the dose delivered according to a pixel 2 could be 0,2 Gy and the dose delivered according to a pixel 1 could be 1 Gy. Other gradients of doses between the pixels may be used.

The present invention is also related to a graphical-user interface (GUI) which acquires and stores data by means of the FFC of all the voltages of the 2-D array of photoresistor and/or semiconductors unit which result in a 2-D dose map with visual dosimetry indicators. Photoresistor voltages may be stored in two sequential steps:
before (Vi) and after (Vf) irradiations. The Vi corresponds to a reference or baseline value for each pixel or area corresponding to a photoresistor or semiconductor unit. The Vf-Vi indicates the final variation of voltage in the photoresistor or semiconductor unit for each pixel or area with the corresponding calibration curve and results are plotted in a user-friendly GUI.

The device and system of the present invention may have applications in different technical fields which are related by the monitoring of ionizing radiations. Such devices and systems may therefore be used in radiotherapy or nuclear application such as radioprotection. However these devices may also be used as devices of everyday life so as to monitor ionizing radiations in any environment.

The device or system of the invention may be miniaturized, wearable, low-cost and placed on human skin. It may be a skin-patched with colorimetric chemical reagents either using commercial gafchromic^{™} films or any other radiosensitive film manufactured for this application for radiation exposure. Such devices and systems allow providing the user with information regarding the dose delivered in real-time on the skin according to specific exposure. The device and systems of the present invention may be disposable.

The device and system of the invention makes it possible to meet the needs of a device which allows measuring in real-time and in situ the dose delivered to a particular location, for instance to a patient during radiotherapy, while traditional detection systems require a delay for measuring the dose delivered by scanning the radiosensitive film.

The examples described above are given as illustrations of embodiments of the invention. They do not in any way limit the scope of the invention which is defined by the following claims.

## Claims

1. A device (10) for measuring the dose delivered through a radiosensitive film (13) under exposure to ionizing radiations, the device comprising:
- a reflection film (11) having an inner face (11a) opposite to an outer face (11b), the inner face being adapted to reflect light;
- at least one light source (12) arranged to emit at least one light beam towards the inner face (11a) of the reflection film;
- a radiosensitive film (13) having a first face (13a) facing the inner face (11a) of the reflection film and an opposite second face (13b);
- an optical sensor system (14) having a first face (14a) facing the second face (13b) of the radiosensitive film (13) and adapted to receive the light beam from the at least one light source (12) after reflection from the inner face (11a) of the reflection film (11), the optical sensor system having a second face (14b) opposite to the first face (14a),
wherein the first face (14a) of the optical sensor system (14) comprises a 2-D array of one or more photoresistor units and/or semiconductor units, the one or more photoresistor and/or semiconductor units being fixed to a support layer;
wherein the reflection film (11), the radiosensitive film (13) and the 2-D array of photoresistor units and/or semiconductor units are essentially parallel, and
wherein the at least one light source (12) is not located between the inner face (11a) of the reflection film (11) and the first face (13a) of the radiosensitive film (13).

2. The device (10) of claim 1, wherein the reflection film (11), the radiosensitive film (13) and the support layer of the optical sensor system (14) are flexible.

3. The device (10) of any one of the previous claims, wherein the device (10) is encapsulated in a polymer.

4. The device (10) of any one of the previous claims, wherein the at least one light source comprises one or more LEDs and/or one or more lasers.

5. The device (10) of any one of the previous claims, wherein the radiosensitive film (13) is a radiochromic film.

6. The device (10) of any one of claims 1 to 5, wherein the radiosensitive film (13) is made of polycarbonate.

7. The device (10) of any one of the previous claims, wherein the device comprises at least one lightguide.

8. The device (10) of any one of the previous claims, wherein the reflection film (11) is a metallized microfilm or a polymer film coated with a layer of metal.

9. The device (10) of any one of the previous claims, wherein the reflection film (11) has a thickness below 100 µm.

10. A system (20) comprising the device (10) according to any one of claims 1 to 9, the system comprising a readout integrated circuit unit (22) connected to the optical sensor system (14) of the device (10) via a first connection (21), and a processing unit (24) connected to the readout integrated circuit unit (22) via a second connection (23).

11. The system (20) of claim 10, wherein the second connection (23) between the readout integrated circuit unit (22) and the processing unit (24) comprises at least one micro-antenna (25) in communication with the processing unit (24).

12. The system (20) of claim 10, wherein the second connection (23) between the readout integrated circuit unit (22) and the processing unit (24) is an RFID tag.

13. The system (20) of any one claims 10 to 12, wherein the processing unit (24) is a remote control system.

14. The use of a device (10) according to any one of claims 1 to 9 or a system (20) according to any one of claims 10 to 13 for measuring the dose delivered through a radiosensitive film (13) under exposure to ionizing radiations.

## Patentansprüche

1. Vorrichtung (10) zum Messen der Dosis, die durch eine strahlungsempfindliche Folie (13) bei der Exposition gegenüber ionisierender Strahlung abgegeben wird, wobei die Vorrichtung Folgendes umfasst:
- eine Reflexionsfolie (11), die eine einer Außenfläche (11b) gegenüberliegende Innenfläche (11a) aufweist, wobei die Innenfläche so ausgelegt ist, dass sie Licht reflektiert;
- mindestens eine Lichtquelle (12), die so angeordnet ist, dass sie mindestens einen Lichtstrahl in Richtung der Innenfläche (11a) der Reflexionsfolie abstrahlt;
- eine strahlungsempfindliche Folie (13), die eine erste Fläche (13a), die der Innenfläche (11a) der Reflexionsfolie zugewandt ist, sowie eine gegenüberliegende zweite Fläche (13b) aufweist;
- ein optisches Sensorsystem (14), das eine erste Fläche (14a) aufweist, die der zweiten Fläche (13b) der strahlungsempfindlichen Folie (13) zugewandt und so ausgelegt ist, dass sie den Lichtstrahl von der mindestens einen Lichtquelle (12) nach der Reflexion von der Innenfläche (11a) der Reflexionsfolie (11) aufnimmt, wobei das optische Sensorsystem eine zweite Fläche (14b) aufweist, die der ersten Fläche (14a) gegenüberliegt,
wobei die erste Fläche (14a) des optischen Sensorsystems (14) ein 2-D-Array aus einer oder mehreren Fotowiderstandseinheiten und/oder Halbleitereinheiten umfasst, wobei die eine oder mehreren Fotowiderstandseinheiten und/oder Halbleitereinheiten an einer Trägerschicht befestigt sind;
wobei die Reflexionsfolie (11), die strahlungsempfindliche Folie (13) und das 2-D-Array von Fotowiderstandseinheiten und/oder Halbleitereinheiten im Wesentlichen parallel zueinander angeordnet sind, und
wobei sich die mindestens eine Lichtquelle (12) nicht zwischen der Innenfläche (11a) der Reflexionsfolie (11) und der ersten Fläche (13a) der strahlungsempfindlichen Folie (13) befindet.

2. Vorrichtung (10) nach Anspruch 1, wobei die Reflexionsfolie (11), die strahlungsempfindliche Folie (13) und die Trägerschicht des optischen Sensorsystems (14) flexibel sind.

3. Vorrichtung (10) nach einem der vorhergehenden Ansprüche, wobei die Vorrichtung (10) in einem Polymer eingekapselt ist.

4. Vorrichtung (10) nach einem der vorhergehenden Ansprüche, wobei die mindestens eine Lichtquelle eine oder mehrere LEDs und/oder einen oder mehrere Laser umfasst.

5. Vorrichtung (10) nach einem der vorhergehenden Ansprüche, wobei die strahlungsempfindliche Folie (13) eine radiochrome Folie ist.

6. Vorrichtung (10) nach einem der Ansprüche 1 bis 5, bei der die strahlungsempfindliche Folie (13) aus Polycarbonat gefertigt ist.

7. Vorrichtung (10) nach einem der vorhergehenden Ansprüche, wobei die Vorrichtung mindestens einen Lichtleiter umfasst.

8. Vorrichtung (10) nach einem der vorhergehenden Ansprüche, wobei die Reflexionsfolie (11) eine metallisierte Mikrofolie oder eine mit einer Metallschicht beschichtete Polymerfolie ist.

9. Vorrichtung (10) nach einem der vorhergehenden Ansprüche, wobei die Reflexionsfolie (11) eine Dicke von weniger als 100 µm aufweist.

10. System (20), das die Vorrichtung (10) nach einem der Ansprüche 1 bis 9 umfasst, wobei das System eine integrierte Auslese-Schaltungseinheit (22), die über eine erste Verbindung (21) mit dem optischen Sensorsystem (14) der Vorrichtung (10) verbunden ist, sowie eine Verarbeitungseinheit (24) umfasst, die über eine zweite Verbindung (23) mit der integrierten Auslese-Schaltungseinheit (22) verbunden ist.

11. System (20) nach Anspruch 10, wobei die zweite Verbindung (23) zwischen der integrierten Auslese-Schaltungseinheit (22) und der Verarbeitungseinheit (24) mindestens eine Mikroantenne (25) umfasst, die mit der Verarbeitungseinheit (24) kommuniziert.

12. System (20) nach Anspruch 10, wobei die zweite Verbindung (23) zwischen der integrierten Auslese-Schaltungseinheit (22) und der Verarbeitungseinheit (24) ein RFID-Tag ist.

13. System (20) nach einem der Ansprüche 10 bis 12, wobei die Verarbeitungseinheit (24) ein Fernsteuerungssystem ist.

14. Verwendung einer Vorrichtung (10) nach einem der Ansprüche 1 bis 9 oder eines Systems (20) nach einem der Ansprüche 10 bis 13 zum Messen der Dosis, die durch eine strahlungsempfindliche Folie (13) bei der Exposition gegenüber ionisierender Strahlung abgegeben wird.

## Revendications

1. Dispositif (10) de mesure de la dose délivrée à travers un film radiosensible (13) lors d'une exposition à des rayonnements ionisants, le dispositif comprenant :
- un film réfléchissant (11) présentant une face interne (11a) opposée à une face externe (11b), la face interne étant adaptée pour réfléchir la lumière ;
- au moins une source lumineuse (12) agencée pour émettre au moins un faisceau lumineux vers la face interne (11a) du film réfléchissant ;
- un film radiosensible (13) présentant une première face (13a) orientée vers la face interne (11a) du film réfléchissant et une seconde face opposée (13b) ;
- un système de capteur optique (14) comprenant une première face (14a) orientée vers la seconde face (13b) du film radiosensible (13) et adapté pour recevoir le faisceau lumineux de l'au moins une source lumineuse (12) après qu'il a été réfléchi par la face interne (11a) du film réfléchissant (11), le système de capteur optique présentant une seconde face (14b) opposée à la première face (14a),
dans lequel la première face (14a) du système de capteur optique (14) comprend un réseau 2D d'une ou de plusieurs unités de photorésistance et/ou unités de semi-conducteur, les une ou plusieurs unités de photorésistance et/ou de semi-conducteur étant fixées à une couche de support ;
dans lequel le film réfléchissant (11), le film radiosensible (13) et le réseau 2D d'unités photorésistantes et/ou d'unités de semi-conducteur sont essentiellement parallèles, et
dans lequel l'au moins une source lumineuse (12) ne se trouve pas entre la face interne (11a) du film réfléchissant (11) et la première face (13a) du film radiosensible (13).

2. Dispositif (10) selon la revendication 1, dans lequel le film réfléchissant (11), le film radiosensible (13) et la couche de support du système de capteur optique (14) sont flexibles.

3. Dispositif (10) selon l'une quelconque des revendications précédentes, dans lequel le dispositif (10) est encapsulé dans un polymère.

4. Dispositif (10) selon l'une quelconque des revendications précédentes, dans lequel l'au moins une source lumineuse comprend une ou plusieurs LED et/ou un ou plusieurs lasers.

5. Dispositif (10) selon l'une quelconque des revendications précédentes, dans lequel le film radiosensible (13) est un film radiochromique.

6. Dispositif (10) selon l'une quelconque des revendications 1 à 5, dans lequel le film radiosensible (13) est en polycarbonate.

7. Dispositif (10) selon l'une quelconque des revendications précédentes, dans lequel le dispositif comprend au moins un guide de lumière.

8. Dispositif (10) selon l'une quelconque des revendications précédentes, dans lequel le film réfléchissant (11) est un microfilm métallisé ou un film en polymère recouvert d'une couche de métal.

9. Dispositif (10) selon l'une quelconque des revendications précédentes, dans lequel le film réfléchissant (11) présente une épaisseur inférieure à 100 µm.

10. Système (20) comprenant le dispositif (10) selon l'une quelconque des revendications 1 à 9, le système comprenant une unité de circuit intégré de lecture (22) connectée au système de capteur optique (14) du dispositif (10) via une première connexion (21), et une unité de traitement (24) connectée à l'unité de circuit intégré de lecture (22) via une seconde connexion (23).

11. Système (20) selon la revendication 10, dans lequel la seconde connexion (23) entre l'unité de circuit intégré de lecture (22) et l'unité de traitement (24) comprend au moins une micro-antenne (25) en communication avec l'unité de traitement (24).

12. Système (20) selon la revendication 10, dans lequel la seconde connexion (23) entre l'unité de circuit intégré de lecture (22) et l'unité de traitement (24) est une étiquette RFID.

13. Système (20) selon l'une quelconque des revendications 10 à 12, dans lequel l'unité de traitement (24) est un système de télécommande.

14. Utilisation d'un dispositif (10) selon l'une quelconque des revendications 1 à 9 ou d'un système (20) selon l'une quelconque des revendications 10 à 13 pour mesurer la dose délivrée à travers un film radiosensible (13) lors d'une exposition à des rayonnements ionisants.
